# EUROPEAN PATENT APPLICATION

(11) **EP 4 631 640 A1**
(43) Date of publication of application: **15.10.2025**
(21) Application number: 24744309.6
(22) Date of filing: 17.01.2024
(51) Int. Cl.: B21D 22/20, B21D 37/10, B21D 37/16, B21D 37/18

(54) **6XXX SERIES ALUMINUM ALLOY FORMING METHOD AND ALUMINUM ALLOY PART PREPARED USING SAME, AND AUTOMOBILE**

(30) Priority: 18.01.2023 CN 202310086707
(71) Applicant: Sington Baoyue Autopart (Shanghai) Co., Ltd., Shanghai 201306 (CN)
(72) Inventor: ZHANG, Tiantian, Shanghai 201306 (CN); QI, Weina, Shanghai 201306 (CN)
(74) Representative: Wang, Bo
(86) International application number: PCT/CN2024/072803
(87) International publication number: WO 2024/153135

(57) **Abstract**

A forming method of a 6XXX series aluminum alloy is provided. The forming method includes heating an aluminum alloy raw material of the 6XXX series aluminum alloy at a heating temperature lower than a solution temperature of the aluminum alloy raw material, and controlling a heat obtained per unit mass of the aluminum alloy raw material to reach a preset heat range; performing a subsequent treatment to the aluminum alloy raw material after heating to obtain an aluminum alloy part. An aluminum alloy part is prepared by the forming method of a 6XXX series aluminum alloy. The automobile includes the aluminum alloy part. Using the forming method, the heating temperature is lower than the solution temperature of the aluminum alloy raw material, thereby preventing the strengthening phase in the aluminum alloy raw material from melting, ensuring quality in the subsequent treatment of the material.

## Description

### CROSS-REFERENCE TO RELATED APPLICATIONS

This application claims priority to the Chinese Patent Application No. 202310086707.8, filed on January 18, 2023, the contents of which are hereby incorporated by reference.

### TECHNICAL FIELD

The present disclosure relates to the field of aluminum alloy processing, and in particular, to a forming method of a 6XXX series aluminum alloy, an aluminum alloy part and an automobile prepared thereby.

### BACKGROUND

In recent years, with the increasing demand for lightweight automobiles, aluminum alloys have played an increasingly important role in lightweight applications, such as aviation and automobiles. The 6XXX series aluminum alloy, due to its good formability, has been widely used in the manufacture of complex parts.

Currently, hot forming production processes for the 6XXX series aluminum alloy require reaching temperatures above the solution temperature, with a heating time of 10 minutes to 30 minutes. This commonly results in problems such as high heating temperatures and long heating times for sheet materials, leading to low overall production efficiency and high energy consumption. Furthermore, in terms of formability, the product surface is prone to wrinkling and cracking, and it is difficult to achieve both high elongation and high strength.

Therefore, it is desired to provide a forming method of a 6XXX series aluminum alloy, an aluminum alloy part and an automobile prepared thereby, which may achieve good machinability, high elongation, and high strength simultaneously.

### SUMMARY

One or more embodiments of the present disclosure provide a forming method of a 6XXX series aluminum alloy. The forming method includes: heating an aluminum alloy raw material of the 6XXX series aluminum alloy for a preset heating duration at a heating temperature lower than a solution temperature of the aluminum alloy raw material, and controlling a heat obtained per unit mass of the aluminum alloy raw material to reach a preset heat range; performing a subsequent treatment to the aluminum alloy raw material after heating to obtain an aluminum alloy part.

In some embodiments, the preset heat range is in a range of 320kJ/kg-450kJ/kg.

In some embodiments, the preset heat range is in a range of 370kJ/kg-400kJ/kg.

In some embodiments, the heating temperature is maintained at 50°C-100°C below the solution temperature of the aluminum alloy raw material.

In some embodiments, the heating temperature is maintained at 70°C-90°C below the solution temperature of the aluminum alloy raw material.

In some embodiments, the heating an aluminum alloy raw material of the 6XXX series aluminum alloy includes: in response to the heating temperature being maintained at 50°C-100°C below the solution temperature of the aluminum alloy raw material, heating the aluminum alloy raw material by a heating device for a preset heating duration of 1 min-8 min.

In some embodiments, in response to the heating temperature being maintained at 50°C-100°C below the solution temperature of the aluminum alloy raw material, heating the aluminum alloy raw material by a heating device for a preset heating duration includes: in response to the heating temperature being maintained at 70°C-90°C below the solution temperature of the aluminum alloy raw material, the preset heating duration being in a range of 2min-5min.

In some embodiments, a thickness of the aluminum alloy raw material is in a range of 0.8mm-5.0mm, and the preset heating duration is related to the thickness.

In some embodiments, the thickness is in a range of 0.8mm-3mm.

In some embodiments, the preset heating duration increases with the thickness, extending by 0s-120s for per 1mm increase in the thickness.

In some embodiments, when the thickness of the aluminum alloy raw material is less than 1mm, the preset heating duration is in a range of 0s-240s; when the thickness of the aluminum alloy raw material is greater than or equal to 1mm and less than 2mm, the preset heating duration is in a range of 120s-300s; when the thickness of the aluminum alloy raw material is greater than or equal to 2mm and less than 3mm, the preset heating duration is in a range of 180s-360s; when the thickness of the aluminum alloy raw material is greater than or equal to 3mm and less than 4mm, the preset heating duration is in a range of 240s-420s; when the thickness of the aluminum alloy raw material is greater than or equal to 4mm and less than or equal to 5mm, the preset heating duration is in a range of 300s-480s.

In some embodiments, the subsequent treatment includes: transferring the aluminum alloy raw material to a mold after heating, performing a stamping forming operation and a pressure holding and cooling operation to obtain a stretched part; heating the stretched part to obtain the aluminum alloy part.

In some embodiments, the stamping forming operation starts at a temperature of 80%-88% of the heating temperature.

In some embodiments, a transfer time of the transferring is less than 15s.

In some embodiments, a stamping speed of a stamping equipment in the stamping forming operation is not less than 80 mm/s.

In some embodiments, the stamping speed is in a range of 120mm/s-330mm/s.

In some embodiments, a cooling rate in the pressure holding and cooling operation is not more than 60°C/s.

In some embodiments, the pressure holding and cooling operation is at a pressure of 0.8 MPa-2 MPa.

In some embodiments, the pressure holding and cooling operation includes: cooling down a formed part formed by the stamping forming operation to less than 200°C, performing natural air cooling.

In some embodiments, before heating the aluminum alloy raw material, performing a pretreatment on the aluminum alloy raw material; wherein the pretreatment includes spraying a lubricant on a surface of the aluminum alloy raw material to ensure that a friction coefficient between the mold and the aluminum alloy raw material does not exceed 0.2.

In some embodiments, a kinetic viscosity of the lubricant is not more than 50 mPa·s at a temperature of 20°C, a density of the lubricant is in a range of 0.97 g/cm³-0.99 g/cm³, and a pH value of the lubricant is in a range of 9-10.

In some embodiments, the 6XXX-series aluminum alloy includes at least one of 6014 aluminum alloy, 6016 aluminum alloy, 6061 aluminum alloy, or 6082 aluminum alloy.

In some embodiments, the aluminum alloy raw material is in a T4 temper or an O temper.

One or more embodiments of the present disclosure provide an aluminum alloy part. The aluminum alloy part is prepared by the forming method of a 6XXX series aluminum alloy.

One or more embodiments of the present disclosure provide an automobile. The automobile includes the aluminum alloy part.

In some embodiments, the aluminum alloy part is disposed in one or more of an inner door panel, an outer door panel, a side panel, and a structural reinforcement of a body of the automobile.

### BRIEF DESCRIPTION OF THE DRAWINGS

The present disclosure is further illustrated in terms of exemplary embodiments. These exemplary embodiments are described in detail with reference to the drawings. These embodiments are non-limiting exemplary embodiments, in which like reference numerals represent similar structures, and wherein:
FIG. 1 is an exemplary flowchart of a forming method of a 6XXX series aluminum alloy according to some embodiments of the present disclosure;
FIG. 2 is an exemplary flowchart of a subsequent treatment according to some embodiments of the present disclosure;
FIG. 3 is a partial photo of an aluminum alloy part obtained according to Embodiment 1 of the present disclosure;
FIG. 4 is a partial photo of an aluminum alloy part obtained according to Comparative Embodiment 1 of the present disclosure;
FIG. 5 is a partial photo of an aluminum alloy part obtained according to Comparative Embodiment 2 of the present disclosure;
FIG. 6 is a partial photo of an aluminum alloy part obtained according to Comparative Embodiment 3 of the present disclosure;
FIG. 7 is a partial photo of an aluminum alloy part obtained according to Comparative Embodiment 4 of the present disclosure;
FIG. 8 is a partial photo of an aluminum alloy part obtained according to Comparative Embodiment 5 of the present disclosure;
FIG. 9 is a partial photo of an aluminum alloy part obtained according to Comparative Embodiment 6 of the present disclosure;
FIG. 10 is a partial photo of an aluminum alloy part obtained according to Comparative Embodiment 7 of the present disclosure;
FIG. 11 is a partial photo of an aluminum alloy part obtained according to Comparative Embodiment 8 of the present disclosure; and
FIG. 12 is a partial photo of an aluminum alloy part obtained according to Comparative Embodiment 9 of the present disclosure.

### DETAILED DESCRIPTION

The accompanying drawings, which are required to be used in the description of the embodiments, are briefly described below. The accompanying drawings do not represent the entirety of the embodiments.

As used herein, "system", "device", "unit" and/or "module" is a manner used to distinguish different components, elements, parts, sections, or assemblies at different levels. However, if other words serve the same purpose, the words may be replaced by other expressions.

As shown in the present disclosure and claims, the words "one", "a", "a kind" and/or "the" are not especially singular but may include the plural unless the context expressly suggests otherwise. In general, the terms "comprise", "comprises", "comprising", "include", "includes", and/or "including", merely prompt to include operations and elements that have been clearly identified, and these operations and elements do not constitute an exclusive listing. The methods or devices may also include other operations or elements.

The present disclosure uses flowcharts to illustrate the operations performed by the system according to the embodiments described herein. It should be understood that the preceding or following operations do not necessarily need to be executed precisely in order. Instead, the operations may be processed in reverse order or simultaneously. Additionally, other operations may be added to these processes, or one or more operations may be removed from them.

In some hot forming production processes for a 6XXX series aluminum alloy, these processes require reaching above a solution temperature, with a heating time of 10min-30min. Such a hot forming production process, on the one hand, presents challenges including high heating temperatures and lengthy heating times, resulting in low production efficiency and high energy consumption. On the other hand, the inventors also found that products processed in this way have quality issues, such as a surface being prone to wrinkling and cracking, and the inability to achieve both high elongation and high strength.

After repeated experiments and research, the inventors finally discovered a reason for the above quality problems: since the main strengthening phase in the 6XXX series aluminum alloy is Mg₂Si, naturally aged aluminum material contains α phase and coarse Mg₂Si phase. Above the solution temperature, the Mg₂Si phase melts, resulting in numerous pores in a sheet material. Quality problems occur in subsequent treatment. For example, under the force of subsequent stamping, these pores act as crack initiation sites and gradually expand during the subsequent stretching of the material, reducing the elongation of the material.

To address the above problems, embodiments of the present disclosure provide a forming method for a 6XXX series aluminum alloy. In the forming method, the heating temperature for the aluminum alloy raw material of aluminum alloy is lower than thesolution temperature of the aluminum alloy raw material of aluminum alloy. This prevents the strengthening phase in the aluminum alloy raw material from melting, ensuring quality in the subsequent treatment of the material. For example, the deformation during stamping is relatively uniform, ensuring high elongation. Since the solution temperature is not reached, the microstructure of the material itself does not change, ensuring the strength of the material.

The 6XXX series aluminum alloy refers to an aluminum alloy material composed of aluminum, magnesium, silicon, and other elements. For example, the 6XXX series aluminum alloy may include 6061 aluminum alloy, 6063 aluminum alloy, 6014 aluminum alloy, etc. The 6XXX series aluminum alloy exhibits excellent mechanical properties, corrosion resistance, and machinability, and is widely used in aerospace, shipbuilding, automotive, construction, electronics, and other industries. In some embodiments of the present disclosure, an aluminum alloy raw material of the 6XXX series aluminum alloy may be used to obtain a 6XXX series aluminum alloy part through the forming method. Additionally, it should be noted that the forming method of the embodiments of the present disclosure is proposed specifically based on research into the composition and material properties of the 6XXX series aluminum alloy.

In some embodiments, the 6XXX series aluminum alloy may include at least one of 6014 aluminum alloy, 6016 aluminum alloy, 6061 aluminum alloy, or 6082 aluminum alloy. The forming method of the embodiments of the present disclosure can be used to prepare the above-mentioned grades of 6XXX series aluminum alloy through the forming method, and can enable the prepared aluminum alloy part to have high elongation and high strength. Of course, the forming method of the embodiments of the present disclosure may also achieve the forming of other grades of 6XXX series aluminum alloys, such as 6181 aluminum alloy, 6063 aluminum alloy, etc.

In some embodiments, the aluminum alloy raw material may be an aluminum alloy in a T4 temper or an O temper.

Compared to aluminum alloys in the T6 temper, aluminum alloys in the T4 temper or O temper may exhibit better ductility at the heating temperature described below. This is because the plastic deformation mechanisms of the two materials in their heat-treated states are different.

The strengthening phase of the aluminum alloys in the T6 temper is relatively coarse after T6 heat treatment. Since the interaction mechanism between dislocations and the phase is a bypass mechanism (also known as the Orowan mechanism), dislocation loops are formed, which strongly hinder dislocation movement. A work hardening rate is high, resulting in poor material plasticity. In contrast, the strengthening phase in the T4 temper aluminum alloy and the Guinier Preston zone (G.P. zone) in the O temper aluminum alloy have not formed large particles. The interaction mechanism between dislocations and the phase is a cutting mechanism. The work hardening rate is smaller, the hindrance to dislocation movement is less, and the plasticity of the material is better.

Therefore, in some embodiments of the present disclosure, by selecting the aluminum alloy in the T4 temper or O temper as the aluminum alloy raw material, and setting the heating temperature for the aluminum alloy raw material below the solution temperature, a heated aluminum alloy aluminum alloy raw material can exhibit better processing performance.

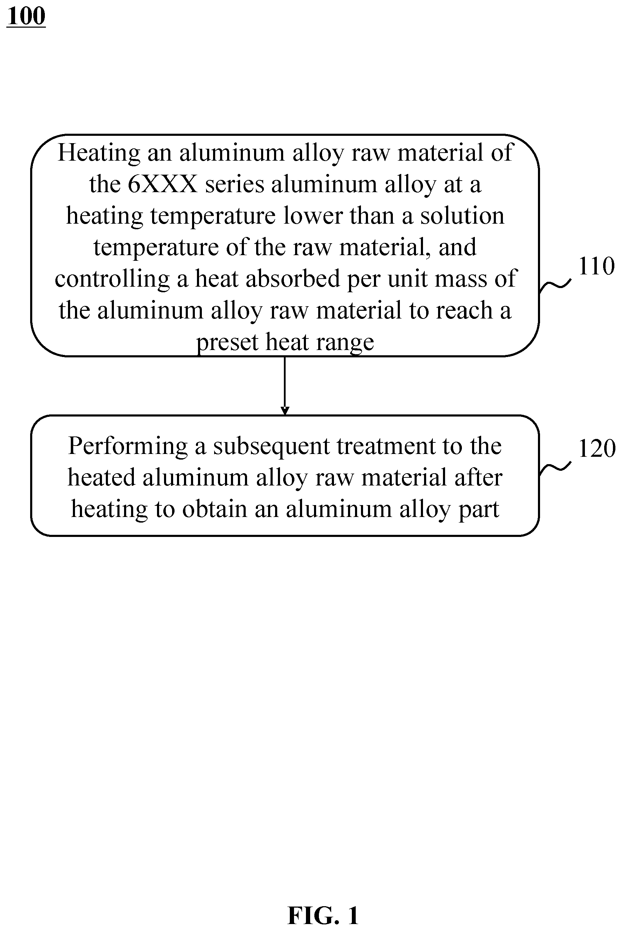

FIG. 1 is an exemplary flowchart of a forming method of a 6XXX series aluminum alloy according to some embodiments of the present disclosure. As shown in FIG. 1, process 100 includes the following operations. In some embodiments, the process 100 may be executed by a forming device for the 6XXX series aluminum alloy.

Step 110, an aluminum alloy raw material of the 6XXX series aluminum alloy is heated at a heating temperature lower than a solution temperature of the aluminum alloy raw material, and a heat absorbed per unit mass of the aluminum alloy raw material is controlled to reach a preset heat range.

Heating the aluminum alloy raw material of the 6XXX series aluminum alloy at a preset heating temperature can improve the plasticity of the aluminum alloy raw material, reduce the deformation resistance in a subsequent forming treatment, and increase the deformation degree achievable by the aluminum alloy raw material in the subsequent forming treatment.

In some embodiments, the heating temperature is lower than the solution temperature of the aluminum alloy raw material. The solution temperature refers to the temperature for a solution treatment of the aluminum alloy raw material of aluminum alloy. The solution treatment refers to a heat treatment process that uses a high temperature to dissolve other alloying elements (e.g., magnesium, silicon, etc., in the 6XXX series aluminum alloy) in a matrix to form a solid solution. Since the heating temperature is lower than the solution temperature of the aluminum alloy raw material, it not only improves the plasticity of the aluminum alloy raw material but also prevents a Mg₂Si strengthening phase in the aluminum alloy raw material from melting. The heating temperature may be related to the alloy designation of the aluminum alloy raw material and to its thickness. For example, aluminum alloy raw materials of different alloy designations have different solution temperatures; for aluminum alloy raw materials with higher solution temperatures, their heating temperature may be higher. As another example, the thicker the aluminum alloy raw material, the higher the heating temperature may be. For more specific descriptions regarding the setting of the heating temperature, please refer to the relevant content below.

The preset heat range refers to a preset range of heat that per unit mass of the aluminum alloy raw material of aluminum alloy needs to absorb. In some embodiments, the preset heat range may be 320kJ/kg-450kJ/kg.

Setting the preset heat range to 320kJ/kg-450kJ/kg ensures that the heat absorbed per unit mass of the aluminum alloy raw material is within a reasonable range, avoiding adverse effects on the processing performance and mechanical properties of the aluminum alloy raw material caused by excessive or insufficient heat absorption (e.g., excessive heat absorption dissolves the strengthening phase in the aluminum alloy raw material, creating pores that lead to crack formation and reduce material elongation; insufficient heat absorption increases the hindrance effect of the strengthening phase on dislocations, etc.).

In some embodiments, the preset heat range is 370kJ/kg-400kJ/kg.

Setting the preset heat range to 370kJ/kg-400kJ/kg allows for better realization of the processing based on the broader range, making the mechanical properties and processing performance of a finished product more excellent, ensuring product quality.

In some embodiments, the heating temperature may be maintained at 50°C-100°C below the solution temperature of the aluminum alloy raw material.

Setting the heating temperature to 50°C-100°C below the solution temperature of the aluminum alloy raw material ensures that the strengthening phase in the aluminum alloy raw material does not melt.

In some embodiments, fluctuation of the heating temperature may be maintained within a temperature fluctuation range. The temperature fluctuation range may be preset according to the specific performance of the selected equipment or processing requirements. In some embodiments, the temperature fluctuation range may be ±10°C.

Preferably, in some embodiments, the heating temperature may be maintained at 70°C-90°C below the solution temperature of the aluminum alloy raw material.

Setting the heating temperature to 70°C-90°C below the solution temperature of the aluminum alloy raw material ensures that the strengthening phase in the aluminum alloy raw material exists in a stable state, neither generating a large count of pores nor exerting a significant hindrance effect of the secondary phase on dislocations.

In some embodiments, the preset heating duration may be related to the heating temperature. For example, under the premise that the heating temperature is lower than the solution temperature of the aluminum alloy raw material, the higher the heating temperature, the shorter the preset heating duration may be. In some embodiments, the preset heating duration may be related to the power of a heating device (e.g., effective heating power). For example, the higher the effective heating power of the heating device, the shorter the preset heating duration may be. In some embodiments, the preset heating duration may also be related to the thickness of the aluminum alloy raw material. For example, the thicker the aluminum alloy raw material, the longer the preset heating duration may be. For more specific descriptions regarding the setting of the preset heating duration, please refer to the relevant content below.

In some embodiments, in response to the heating temperature being maintained at 50°C-100°C below the solution temperature of the aluminum alloy raw material, the aluminum alloy raw material is heated by the heating device for the preset heating duration of 1 min-8 min. It is understandable that if the preset heating duration is too short, the temperature difference on the surface of the sheet material is too large, which affects local forming effects. Conversely, if the preset heating duration is too long, grains coarsen, leading to reduced elongation of the material at high temperatures and lower forming quality. Therefore, the above preset heating duration may ensure the formation effects and the formation quality.

In some embodiments, the effective heating power of the heating device is in a range of 320 KW.h-400KW.h. The effective heating power is a parameter that reflects the heating power of the heating device, which may be equal to the total power of the heating device multiplied by its heating efficiency. When limiting the heating temperature and heating duration, further considering the effective power of the heating device can prevent the heating efficiency of the heating device from affecting the final heating effect. That is, by comprehensively considering the effective heating efficiency of the heating device, the heating temperature, and the heating duration, the heat absorbed per unit mass of the aluminum alloy raw material can be controlled more accurately, ensuring that the heated aluminum alloy raw material reaches a desired state.

In some embodiments, the effective heating power of the heating device is in a range of 350KW.h-370KW.h.

Setting the effective heating power of the heating device to 350KW.h-370KW.hallows, based on the aforementioned broader range, precise control over the heating effect of the aluminum alloy raw material by defining a smaller effective heating power range to achieve, ensuring that the heat absorbed by the aluminum alloy raw material is within an appropriate range, and guaranteeing good performance and a high yield rate of a finished workpiece.

In some embodiments, when the heating temperature is maintained at 70°C-90°C below the solution temperature of the aluminum alloy raw material, the preset heating duration is 2min-5min. In some embodiments, under this scenario, the effective heating power of the heating device may also be 350KW.h-370KW.h.

Setting a preferred range of the preset heating duration to 2min-5min can achieve better forming machinability and ductility based on the aforementioned broader ranges of heating temperature and preset heating duration. The strengthening phase in the aluminum alloy raw material exists stably at a certain concentration, without generating a large count of pores, and exerts a small hindrance effect of the secondary phase on dislocations, thereby improving the forming machinability and ductility of the aluminum alloy raw material of aluminum alloy.

In some embodiments, the aluminum alloy raw material may have a certain thickness. The thickness refers to a distance between two opposite surfaces of the aluminum alloy raw material. For example, when the aluminum alloy raw material is plate-shaped, the thickness is a distance between two surfaces in a vertical direction when the aluminum alloy raw material is placed horizontally.

In some embodiments, the thickness of the aluminum alloy raw material is in a range of 0.8mm-5.0mm. Setting the thickness of the aluminum alloy raw material to the above range ensures that the aluminum alloy raw material can be heated uniformly during heating and is easy to form in subsequent forming treatment.

In some embodiments, the thickness of the aluminum alloy raw material may also be in a range of 0.8mm-4.5mm; or the thickness may also be in a range of 0.8mm-4.0mm; or the thickness may also be in a range of 0.8mm-3.5mm. Preferably, the thickness of the aluminum alloy raw material may be in a range of 0.8mm-3.0mm.

In some embodiments of the present disclosure, by setting a preferred thickness range of the aluminum alloy raw material to 0.8mm-3.0mm, it can further ensure a more uniform heating effect and reduce temperature differences based on the aforementioned broader thickness range.

In some embodiments, the preset heating duration may be related to the thickness of the aluminum alloy raw material. For example, the preset heating duration may be positively correlated with the thickness; the greater the thickness, the longer the preset heating duration.

In some embodiments, the preset heating duration increases with the thickness, extending by 0s-120s for per 1mm increase in the thickness. For example, when the thickness of the aluminum alloy raw material is 1mm, the heating time is in a range of 120s-240s; when the thickness is 2mm, the heating time is in a range of 180s-300s; when the thickness is 3mm, the heating time is in a range of 240s-360s; when the thickness is 4mm, the heating time is in a range of 300s-420s; when the thickness is 5mm, the heating time is in a range of 360s-480s.

In some embodiments, the thickness of the aluminum alloy raw material is less than 1mm and the preset heating duration is in a range of 0s-240s; or the thickness of the aluminum alloy raw material is greater than or equal to 1mm and less than 2mm, the preset heating duration is in a range of 120s-300s; or the thickness of the aluminum alloy raw material is greater than or equal to 2mm and less than 3mm, the preset heating duration is in a range of 180s-360s; or the thickness of the aluminum alloy raw material is greater than or equal to 3mm and less than 4mm, the preset heating duration is in a range of 240s-420s; or the thickness of the aluminum alloy raw material is greater than or equal to 4mm and less than or equal to 5mm, the preset heating duration is in a range of 300s-480s.

In some embodiments of the present disclosure, by setting the preset heating duration to increase with thickness and providing related specific range values, the impact of thickness on heating time is considered. This facilitates users adjusting the heating duration based on the thickness in a timely manner, ensuring that all parts of the aluminum alloy raw material are heated to achieve ideal forming performance and avoiding adverse effects on subsequent forming processes.

In some embodiments, the aluminum alloy raw material of the 6XXX series aluminum alloy may be heated by the heating device based on the set heating temperature to control the heat absorbed per unit mass of the aluminum alloy raw material to reach the preset heat range.

In some embodiments, the heating device heats by means of hot air circulation.

Understandably, the heating device here is a device for heating the aluminum alloy raw material of aluminum alloy. Heating by hot air circulation, as opposed to traditional hot forming equipment using thermal radiation, can improve the heating efficiency and shorten the heating time.

Step 120, a subsequent treatment may be performed to the heated aluminum alloy raw material after heating to obtain an aluminum alloy part.

The subsequent treatment refers to other processing techniques required for forming after heating. For example, the subsequent treatment includes stamping, cooling, polishing, etc.

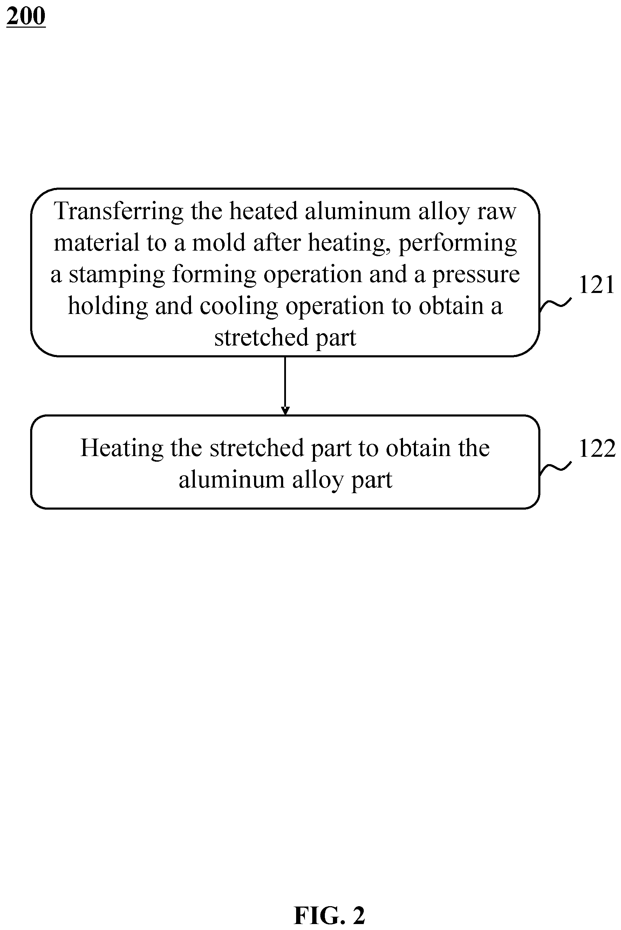

In some embodiments, as shown in FIG. 2, the subsequent treatment may include the following two steps:
Step 121, the heated aluminum alloy raw material may be transferred to a mold after heating, a stamping forming operation and a pressure holding and cooling operation may be performed on the heated aluminum alloy raw material to obtain a stretched part.

Step 122, the stretched part may be heated to obtain the aluminum alloy part.

In some embodiments, the stamping forming operation starts at a temperature of 80%-88% of the heating temperature. By limiting a starting temperature of the stamping forming operation within this range, it avoids the temperature being too low during stamping, which affects the quality of the finished product; it also avoids excessively coarse grains in the aluminum alloy raw material caused by excessively high temperature, which reduces the elongation of the material at high temperatures and lowers forming quality. In some embodiments, the stamping forming operation starts at a temperature of 82%-87% of the heating temperature. In some embodiments, the stamping forming operation starts at a temperature of 84%-86% of the heating temperature.

In some embodiments, the transfer time of the transferring is less than 15s.

Understandably, limiting the transfer time may be used to control the stamping temperature. In some embodiments of the present disclosure, by setting the transfer time to less than 15s, the temperature loss during the stamping process can be kept within a reasonable range, preventing the temperature of the aluminum alloy raw material from becoming too low during subsequent stamping and avoiding adverse effects on subsequent process steps.

The stamping forming operation refers to a processing and forming manner that applies external force to the aluminum alloy raw material through stamping equipment and a mold, causing plastic deformation or separation, thereby obtaining workpieces with the desired shape and size. The stamping equipment may include a stamping press, etc.

In some embodiments, a stamping speed of the stamping equipment in the stamping forming operation is not less than 80 mm/s. Understandably, if the stamping speed is too low, the strain of the aluminum alloy raw material in the mold may be too small, resulting in poor plastic deformation and a higher likelihood of cracking. In some embodiments of the present disclosure, by setting the stamping speed to not less than 80 mm/s, the stamping effect can be ensured, avoiding cracking.

In some embodiments, the stamping speed may also be in a range of 80mm/s-500mm/s; or the stamping speed may also be in a range of 80mm/s-450mm/s; or the stamping speed may also be in a range of 100mm/s-400mm/s; or the stamping speed may also be in a range of 120mm/s-350mm/s. Preferably, the stamping speed may be in a range of 120mm/s-330mm/s.

Understandably, when a target shape for the stamping forming operation is relatively simple (e.g., the part is a large-area flat plate, etc.), a lower stamping speed should be maintained; too high the stamping speed may cause wrinkling on the part surface. When the target shape for the stamping forming operation is relatively complex (e.g., the part has an irregular shape with many openings, grooves, etc.), too low the stamping speed may cause insufficient strain of the aluminum alloy raw material in the mold, affecting plastic deformation and making it prone to cracking; too high the stamping speed may cause the part to fracture. Therefore, the stamping speed of the stamping equipment in the stamping forming operation should be kept within a suitable range.

In some embodiments of the present disclosure, by setting the preferred range of stamping speed to 120mm/s-330mm/s, better processing effects can be achieved, ensuring the smooth progress of the stamping process and the yield rate of the obtained formed parts, avoiding the occurrence of the adverse phenomena.

In some embodiments, the stamping speed may be determined based on the target shape of the stamping forming operation. The target shape refers to a shape of the part desired after the stamping forming operation. In some embodiments, the stamping speed may be determined based on a ratio of a stretched part area to a stamping area. The stretched part area refers to a surface area of the stretched part obtained after the stamping forming operation. The stamping area refers to a projected area of the target shape of the stamping forming operation on a surface parallel to the surface of the stretched part. In some embodiments, when the ratio of the stretched part area to the stamping area is greater than 1.2, the stamping speed may be 120mm/s-330mm/s. In some embodiments, when the ratio of the stretched part area to the stamping area is less than or equal to 1.2, the stamping speed may be 80mm/s-180mm/s.

In some embodiments, the stamping speed may be determined by looking up a table based on the target shape. The table records different shapes and their corresponding stamping speeds, and the parameters in the table are set based on experience.

In some embodiments, the forming device may determine the stamping speed based on target shape information using a stamping speed determination model. The target shape information refers to information related to the target shape. For example, the target shape information may include dimensions of the target shape, a part drawing, etc.

The stamping speed determination model refers to a model used to determine the stamping speed. In some embodiments, the stamping speed determination model may be a machine learning model, such as a Neural Network (NN) model, a Convolutional Neural Network (CNN) model, etc. In some embodiments, an input to the stamping speed determination model may be the target shape information; an output of the stamping speed determination model may be the determined stamping speed.

In some embodiments, the stamping speed determination model may be trained using a plurality of training samples with labels. A training sample may include target shape information of a sample part. The label corresponding to the training sample may include an optimal stamping speed corresponding to the target shape information of the sample part. The optimal stamping speed may be obtained based on repeated experiments. Users may set different stamping speeds to perform the stamping forming operation on the sample part and select the stamping speed corresponding to the sample part with the best-formed shape as the optimal stamping speed.

In some embodiments of the present disclosure, by setting the stamping speed to be determined based on the target shape of the stamping forming operation, a more reasonable stamping speed can be determined according to the part shape; based on the target shape information, using the stamping speed determination model to determine the stamping speed allows comprehensive consideration of a plurality of factors affecting the stamping speed, making the determination process of the stamping speed more intelligent and efficient, and the results more accurate.

The pressure holding and cooling operation refers to a process during the cooling of the part after forming, where a certain pressure is maintained within the mold to prevent deformation of the part due to cooling shrinkage.

In some embodiments, the pressure holding and cooling operation is at a pressure of 0.8 MPa-2 MPa. Preferably, the pressure may be 1 MPa.

In some embodiments of the present disclosure, by setting the pressure for the pressure holding and cooling operation to 0.8 MPa-2 MPa, the pressure holding process can proceed smoothly, avoiding part shrinkage or cracking caused by inappropriate pressure.

In some embodiments, a cooling rate in the pressure holding and cooling operation is not more than 60°C/s.

In some embodiments, cooling may be performed through a cooling medium. The cooling medium refers to a substance used for cooling. For example, the cooling medium may include liquids such as water, ethanol, etc. In some embodiments, the cooling medium may be a liquid at room temperature.

Understandably, when a temperature of the cooling medium is too low, the cooling rate is faster, easily causing a large temperature difference on a surface of the formed part, leading to cracking due to uneven cooling; when the temperature of the cooling medium is too high, the viscosity on a surface of the aluminum alloy is greater, easily causing adhesion to mold inserts and resulting in wear, and it is also not conducive to a smooth and flat surface of the formed part. In some embodiments of the present disclosure, by setting the cooling rate not to exceed 60°C/s, the viscosity on the surface of the aluminum alloy can be moderate, the temperature difference can be small, ensuring better forming effects.

In some embodiments, the pressure holding and cooling operation includes cooling down the formed part formed by the stamping forming operation to less than 200°C, performing natural air cooling. The formed part refers to a workpiece that has the formed shape after the aluminum alloy raw material undergoes the stamping forming operation.

Understandably, if natural air cooling is used initially, it may lead to situations such as too fast cooling rate, excessive temperature difference on the surface of the formed part, and cracking. In some embodiments of the present disclosure, by cooling the formed part after the stamping forming operation to below 200°C before performing natural air cooling, the temperature drop during the entire cooling process can be more uniform, ensuring that the mechanical property of the stretched part is not affected.

The stretched part refers to a workpiece obtained after the stamping forming operation and the pressure holding and cooling operation, which can undergo stretching and extending.

In some embodiments, the forming device may heat and hold the obtained stretched part to obtain the aluminum alloy part. In some embodiments, the heating temperature for heating the stretched part may be in the range of 150°C to 220°C, and the holding time for holding the stretched part may be in the range of 0.2 hours to 10 hours.

In some embodiments, the forming device may perform a pretreatment on the aluminum alloy raw material before heating the aluminum alloy raw material. The pretreatment includes spraying a lubricant on a surface of the aluminum alloy raw material to ensure that a friction coefficient between the mold and the aluminum alloy raw material does not exceed 0.2.

In some embodiments of the present disclosure, by spraying the lubricant on the surface of the aluminum alloy raw material to ensure that the friction coefficient between the mold and the aluminum alloy raw material does not exceed 0.2, the friction between the surface of the aluminum alloy raw material and the mold can be reduced, avoiding adverse effects on forming.

In some embodiments, a kinetic viscosity of the lubricant is not more than 50 mPa·s at a temperature of 20° C, a density of the lubricant is in a range of 0.97 g/cm3-0.99 g /cm3, and a pH value of the lubricant is in a range of 9-10.

In some embodiments of the present disclosure, by setting specific parameters of the lubricant, a liquid lubricant with a low viscosity coefficient and easy cleaning can be selected, achieving better lubrication effects.

Understandably, the main strengthening phase in the 6XXX series aluminum alloy is Mg₂Si. Naturally aged aluminum alloy contains α phase and coarse Mg₂Si phase. During hot forming of the 6XXX series aluminum alloy, if the heating temperature is close to or above the solution temperature, Mg₂Si will dissolve and generate a large number of pores. Under the force of stamping, these pores act as crack initiation sites and gradually expand during the subsequent stretching of the material, thereby reducing the material's ability to elongate. However, when the heating temperature is too far below the solution temperature, the content of Mg₂Si is higher, which increases the hindrance to dislocations and prevents a significant improvement in elongation.

In some embodiments of the present disclosure, by heating the aluminum alloy raw material of the 6XXX series aluminum alloy for the preset heating duration at the heating temperature lower than its solution temperature and performing the subsequent treatment on the heated aluminum alloy raw material to obtain the aluminum alloy part, the Mg₂Si strengthening phase can exist stably at a certain concentration. This approach avoids generating a large number of pores while minimizing the hindrance effect of the secondary phase on dislocations, thereby significantly improving the ductility of the material. During processing, it can achieve both high elongation and strength, avoiding wrinkling and cracking on the product surface.

By setting the subsequent treatment to include transferring the aluminum alloy raw material to the mold after heating, performing the stamping forming operation and the pressure holding and cooling operation to obtain the stretched part, and then heating the stretched part to get the aluminum alloy part, a plurality of process treatments can be performed on the heated aluminum alloy aluminum alloy raw material, realizing the transformation from aluminum alloy raw material to part. Through the coordination of each process step, parts with good elongation performance and high mechanical strength are obtained. The processing is simpler, overall production efficiency is higher, and energy consumption is lower.

The aluminum alloy part obtained through the cooperation of the aforementioned process steps and related parameters (the heating temperature 50°C-100°C below the solution temperature of the aluminum alloy raw material, the preset heating duration 1min-8min, the transfer time 10s-15s, the stamping speed not less than 80mm/s, the cooling rate not more than 60°C/s, etc.) has good elongation capability before and after fracture, and the elongation after fracture may reach 104.3-109.5%.

The aluminum alloy part refers to a part made of the 6XXX series aluminum alloy obtained after forming, such as an inner door panel, an outer door panel, a door window frame, etc.

### Embodiment 1

This embodiment provides a forming method of a 6XXX series aluminum alloy. A 6014 aluminum alloy raw material with a thickness of 1.1mm is used as an aluminum alloy raw material. The solution temperature of the aluminum alloy is 540°C. The specific steps of the forming method include:
(1) Spraying the lubricant on the surface of the aluminum alloy raw material to ensure that the friction coefficient between a mold and the aluminum alloy raw material does not exceed 0.2.
(2) Heating the aluminum alloy raw material by the heating device at a heating temperature of 450°C (90°C below the solution temperature) for a preset heating duration of 90s.
(3) Transferring the aluminum alloy raw material from the heating device to the mold with a transfer time of 12s; completing the stamping forming operation at a stamping speed of 100mm/s on the mold driven by stamping equipment, performing the pressure holding and cooling operation at a cooling rate of 10°C/s and a pressure of 1MPa. After cooling down to below 200°C, performing natural air cooling to obtain a stretched part;
(4) Heating the stretched part to 180°C and holding for 1.5h to obtain an aluminum alloy part.

### Embodiment 2

This embodiment provides a forming method of a 6XXX series aluminum alloy. A 6181 aluminum alloy raw material with a thickness of 1.5mm is used as the aluminum alloy raw material. The solution temperature of the aluminum alloy is 540°C. The specific steps of the forming method include:
(1) Spraying the lubricant on the surface of the aluminum alloy raw material to ensure that the friction coefficient between the mold and the aluminum alloy raw material does not exceed 0.2.
(2) Heating the aluminum alloy raw material by the heating device at a heating temperature of 450°C (90°C below the solution temperature) for a preset heating duration of 4min.
(3) Transferring the aluminum alloy raw material from the heating device to the mold with a transfer time of 13s; completing the stamping forming operation at a stamping speed of 80mm/s on the mold driven by the stamping equipment, performing the pressure holding and cooling operation at a cooling rate of 20°C/s and a pressure of 1MPa. After cooling down to below 200°C, performing natural air cooling to obtain a stretched part;
(4) Heating the formed stretched part to 180°C and holding for 1.5h to obtain an aluminum alloy part.

### Embodiment 3

This embodiment provides a forming method of a 6XXX series aluminum alloy. A 6016 aluminum alloy raw material with a thickness of 1.1mm is used as the aluminum alloy raw material. The solution temperature of the aluminum alloy is 540°C. The specific steps of the forming method include:
(1) Spraying the lubricant on the surface of the aluminum alloy raw material to ensure that the friction coefficient between the mold and the aluminum alloy raw material does not exceed 0.2.
(2) Heating the aluminum alloy raw material by the heating device at a heating temperature of 450°C (90°C below the solution temperature) for a preset heating duration of 7min.
(3) Transferring the aluminum alloy raw material from the heating device to the mold with a transfer time of 13s; completing the stamping forming operation at a stamping speed of 80mm/s on the mold driven by the stamping equipment, performing the pressure holding and cooling operation at a cooling rate of 20°C/s and a pressure of 1MPa. After cooling down to below 200°C, performing natural air cooling to obtain a stretched part;
(4) Heating the stretched part to 190°C and holding for 8h to obtain an aluminum alloy part.

### Embodiment 4

This embodiment provides a forming method of a 6XXX series aluminum alloy. A 6082 aluminum alloy raw material with a thickness of 1.5mm is used as the aluminum alloy raw material. The solution temperature of the aluminum alloy is 540°C. The specific steps of the forming method include:
(1) Spraying the lubricant on the surface of the aluminum alloy raw material to ensure that the friction coefficient between the mold and the aluminum alloy raw material does not exceed 0.2.
(2) Heating the aluminum alloy raw material by the heating device at a heating temperature of 450°C (90°C below the solution temperature) for a preset heating duration of 5min.
(3) Transferring the aluminum alloy raw material from the heating device to the mold with a transfer time of 14s;completing the stamping forming operation at a stamping speed of 90mm/s on the mold driven by the stamping equipment, performing the pressure holding and cooling operation at a cooling rate of 40°C/s and a pressure of 1MPa. After cooling down to below 200°C, performing natural air cooling to obtain a stretched part;
(4) Heating the stretched part to 220°C and holding for 3h to obtain an aluminum alloy part.

### Embodiment 5

This embodiment provides a forming method of a 6XXX series aluminum alloy. A 6014 aluminum alloy raw material with a thickness of 1.1mm is used as the aluminum alloy raw material. The solution temperature of the aluminum alloy is 540°C. The specific steps of the forming method include:
(1) Spraying the lubricant on the surface of the aluminum alloy raw material to ensure that the friction coefficient between the mold and the aluminum alloy raw material does not exceed 0.2.
(2) Heating the aluminum alloy raw material by the heating device at a heating temperature of 450°C (90°C below the solution temperature) for a preset heating duration of 1min.
(3) Transferring the aluminum alloy raw material from the heating device to the mold with a transfer time of 8s; completing the stamping forming operation at a stamping speed of 110mm/s on the mold driven by the stamping equipment, performing the pressure holding and cooling operation at a cooling rate of 60°C/s and a pressure of 1MPa. After cooling down to below 200°C, performing natural air cooling to obtain a stretched part;
(4) Heating the stretched part to 150°C and holding for 10h to obtain an aluminum alloy part.

### Comparative Embodiment 1

This Comparative Embodiment provides a forming method for a 6XXX series aluminum alloy. The difference from Embodiment 1 is that in step (2), the heating temperature is 540°C (the solution temperature), and the preset heating duration is 10min.

### Comparative Embodiment 2

This Comparative Embodiment provides a hot forming process. The difference from Embodiment 1 is that in step (2), the heating temperature is 540°C (the solution temperature), and the preset heating duration is 90s.

### Comparative Embodiment 3

This Comparative Embodiment provides a hot forming process. The difference from Embodiment 1 is that in step (2), the heating temperature is 520°C (20°C below the solution temperature), and the preset heating duration is 90s.

### Comparative Embodiment 4

This Comparative Embodiment provides a hot forming process. The difference from Embodiment 1 is that in step (2), the heating temperature is 450°C (90°C below the solution temperature), and the preset heating duration is 15min.

### Comparative Embodiment 5

This Comparative Embodiment provides a hot forming process. The difference from Embodiment 1 is that in step (3), the transfer time is 20s.

### Comparative Embodiment 6

This Comparative Embodiment provides a hot forming process. The difference from Embodiment 1 is that in step (3), the cooling rate is 80°C/s.

### Comparative Embodiment 7

This Comparative Embodiment provides a hot forming process. The difference from Embodiment 1 is that in step (3), the stamping speed is 50 mm/s.

### Comparative Embodiment 8

This Comparative Embodiment provides a hot forming process. The difference from Embodiment 1 is that in step (2), the heating temperature is 400°C (140°C below the solution temperature).

### Comparative Embodiment 9

This Comparative Embodiment provides a hot forming process. The difference from Embodiment 1 is that in step (2), the heating temperature is 300°C (240°C below the solution temperature).

### Test Embodiment

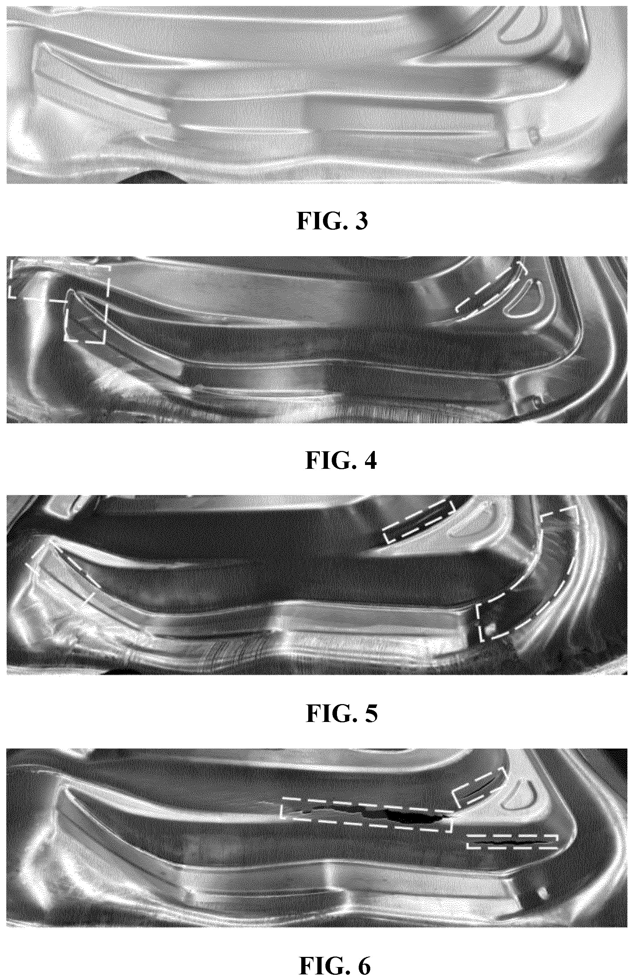

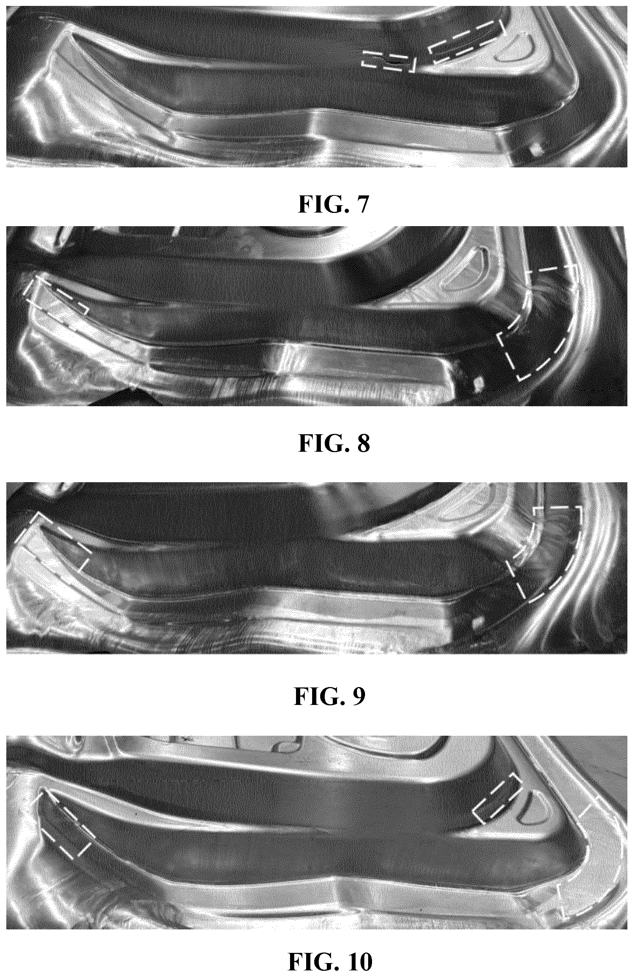

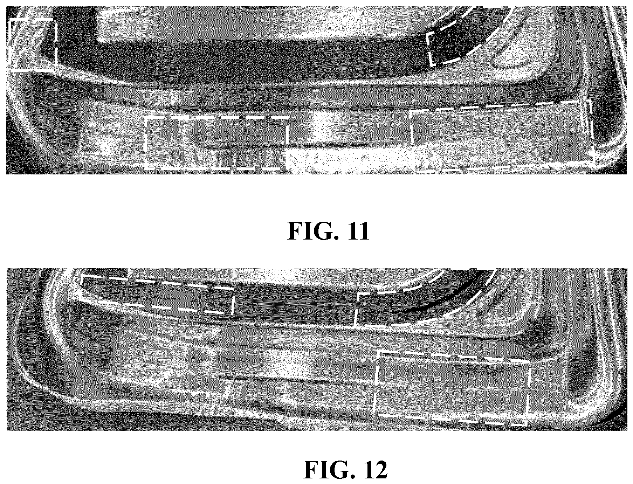

(1) For the heated aluminum alloy aluminum alloy raw material obtained in step (2) of each embodiment and Comparative Embodiment, after natural air cooling for 12s, a high-temperature tensile test was conducted according to the GB/T228.2-2021 standard at a strain rate of 1s⁻¹ to obtain its elongation. The results are shown in Table 1.
(2) For the stretched parts obtained in step (3) of each embodiment and Comparative Embodiment, A50 specimens were prepared according to the GB/T228.1-2021 standard and subjected to tensile tests to obtain a tensile strength and a yield strength of the parts after stamping. The results are shown in Table 1.
(3) A surface state of the final aluminum alloy parts obtained in each embodiment and Comparative Embodiment was observed. The results are shown in Table 2 and FIGs. 3-12.

**Table 1 Elongation and Strength of Each Embodiment and Comparative Embodiment**

| | Elongation after fracture | Tensile strength/MPa | Yield strength/MPa |
|---|---|---|---|
| Example 1 | 109.5% | 193 | 89 |
| Example 2 | 105% | 244 | 119 |
| Example 3 | 108.3% | 191 | 90 |
| Example 4 | 104.3% | 248 | 117 |
| Example 5 | 108.8% | 192 | 93 |
| Comparative Embodiment 1 | 99.4% | 190 | 88 |
| Comparative Embodiment 2 | 85.9% | 181 | 85 |
| Comparative Embodiment 3 | 82.2% | 188 | 86 |
| Comparative Embodiment 4 | 58.4% | 177 | 81 |
| Comparative Embodiment 5 | 109.2% | 189 | 85 |
| Comparative Embodiment 6 | 109.6% | 190 | 87 |
| Comparative Embodiment 7 | 109.4% | 185 | 87 |
| Comparative Embodiment 8 | 31% | 192 | 92 |
| Comparative Embodiment 9 | 22% | 205 | 99 |

**Table 2 Part Status of Each Embodiment and Comparative Embodiment**

| | Part surface status |
|---|---|
| Example 1 | Forming status intact, no wrinkling or cracking on the part surface, see FIG. 3 for details |
| Example 2 | Forming status intact, no wrinkling or cracking on the part surface |
| Example 3 | Forming status intact, no wrinkling or cracking on the part surface |
| Example 4 | Forming status intact, no wrinkling or cracking on the part surface |
| Example 5 | Forming status intact, no wrinkling or cracking on the part surface |
| Comparative Embodiment 1 | The part has wrinkling and slight necking, see FIG. 4 for details, defects shown by dashed lines in the figure |
| Comparative Embodiment 2 | The part has extensive wrinkling and cracking, see FIG. 5 for details, defects shown by dashed lines in the figure |
| Comparative Embodiment 3 | The part has large-area cracking, see FIG. 6 for details, defects shown by dashed lines in the figure |
| Comparative Embodiment 4 | The parthas cracking, see FIG. 7 for details, defects shown by dashed lines in the figure |
| Comparative Embodiment 5 | The part has wrinkling, severe overlapping at critical points, see FIG. 8 for details, defects shown by dashed lines in the figure |
| Comparative Embodiment 6 | The part has wrinkling to varying degrees, see FIG. 9 for details, defects shown by dashed lines in the figure |
| Comparative Embodiment 7 | The parthas slight wrinkling and cracking, see FIG. 10 for details, defects shown by dashed lines in the figure |
| Comparative Embodiment 8 | The part has wrinkling and cracking, see FIG. 11 for details, defects shown by dashed lines in the figure |
| Comparative Embodiment 9 | The part has wrinkling and cracking, see FIG. 12 for details, defects shown by dashed lines in the figure |

As may be seen from the above two tables, the heated aluminum alloy aluminum alloy raw material in the embodiments of the present disclosure has excellent elongation after fracture and the aluminum alloy parts obtained have intact forming status, excellent mechanical properties, and no wrinkling or cracking on the surface. Comparative Embodiment 1 used a conventional hot forming process. The mechanical properties of the obtained parts are similar to those of Embodiment 1 of the present disclosure. However, because the elongation after fracture of the heated aluminum alloy aluminum alloy raw material is significantly lower than that of the embodiments, the final parts have defects. In Comparative Embodiment 2, the aluminum alloy raw material reached the solution temperature, but the heating time was short, leading to insufficient solution treatment. This causes uneven microstructure, resulting in worse elongation, reduced strength, and defects on the part surface. In Comparative Embodiment 3, although the aluminum alloy raw material did not reach the solution temperature, at that heating temperature, some secondary phase particles with low melting points began to melt. This melting inside the material causes pores to appear. Since not all secondary phases melt uniformly, pores are generated. These pores act as crack initiation sites under external force, leading to poor overall ductility of the aluminum alloy raw material. With increasing external force, the material fractures at these pores. Therefore, the overall formability of Comparative Embodiment 3 is relatively poor, resulting in large-area cracking of the part. Comparative Embodiment 4 used the heating temperature of the embodiments but had an excessively long heating time, greatly impacting elongation after fracture, part status, and strength. The first two steps of Comparative Embodiments 5-7 are the same as Embodiment 1, so their measured elongation after fracture is basically consistent with Embodiment 1. However, changing the parameters of subsequent steps (e.g., transfer time too long, cooling rate too fast, or forming speed too slow) causes the temperature of the aluminum alloy raw material during forming to drop below the optimal range. This leads to poorer formability of the aluminum alloy raw material, ultimately reflected in many defects in the part status. In Comparative Embodiments 8-9, the aluminum alloy raw material temperature is far below the solution temperature. At this point, there is a higher content of strengthening phases, increasing the hindrance to dislocations. This results in excellent strength but no significant improvement in ductility, and the products have wrinkling and cracking.

One or more embodiments of the present disclosure further provide an aluminum alloy part, wherein the aluminum alloy part is prepared by the forming method of the 6XXX series aluminum alloy according to any one of the foregoing embodiments. The aluminum alloy part prepared by the forming method of the 6XXX series aluminum alloy in the foregoing embodiments can achieve both mechanical properties and ductility of the part.

One or more embodiments of the present disclosure further provide an automobile, wherein the automobile includes the aluminum alloy part. By using the aluminum alloy part in the automobile, the strength of the automobile can be ensured, providing better resistance to wind pressure, impact, and other external forces.

In some embodiments, the aluminum alloy part is disposed in one or more of an inner door panel, an outer door panel, a side panel, and a structural reinforcement of a body of the automobile. For example, the aluminum alloy part may be applied to a left front outer door panel, a right rear inner door panel, a side outer panel, a chassis reinforcement, etc., of the automobile body.

By using the aluminum alloy part in one or more of the inner door panels, outer door panels, side panels, and structural reinforcements of the automobile body, the strength of the body can be ensured, making it resistant to deformation, sturdy, and durable.

The basic concepts have been described above. Obviously, for those skilled in the art, the above detailed disclosure is merely by way of example and does not constitute a limitation on the present disclosure. Although not explicitly stated herein, those skilled in the art may make various modifications, improvements, and amendments to the present disclosure. Such modifications, improvements, and amendments are suggested in the present disclosure, so they still fall within the spirit and scope of the exemplary embodiments of the present disclosure.

At the same time, the present disclosure uses specific words to describe the embodiments of the present disclosure. Such as "one embodiment," "an embodiment," and/or "some embodiments" mean a certain feature, structure, or characteristic related to at least one embodiment of the present disclosure. Therefore, it should be emphasized and noted that "an embodiment" or "one embodiment" or "an alternative embodiment" mentioned two or more times in different places in the present disclosure does not necessarily refer to the same embodiment. Furthermore, certain features, structures, or characteristics in one or more embodiments of the present disclosure may be combined appropriately.

Furthermore, unless explicitly stated in the claims, the order of processing elements and sequences described in the present disclosure, the use of numbers and letters, or the use of other names are not intended to limit the order of the processes and methods of the present disclosure. Although some currently considered useful inventive embodiments are discussed in the above disclosure through various examples, it should be understood that such details are for illustrative purposes only, and the appended claims are not limited to the disclosed embodiments. On the contrary, the claims are intended to cover all modifications and equivalent combinations that conform to the essence and scope of the embodiments of the present disclosure. For example, although the system components described above may be implemented through hardware devices, they may also be implemented solely through software solutions, such as installing the described system on existing servers or mobile devices.

Similarly, it should be noted that to simplify the expression of the disclosure in the present disclosure and thereby aid in the understanding of one or more inventive embodiments, multiple features are sometimes grouped into one embodiment, figure, or its description in the foregoing description of the embodiments of the present disclosure. However, this method of disclosure does not mean that the object of the present disclosure requires more features than those mentioned in the claims. In fact, the features of the embodiments are fewer than all the features of the single embodiments disclosed above.

Some embodiments use numbers to describe the quantity of components or properties. It should be understood that such numbers used in the description of embodiments are, in some examples, modified by the terms "about," "approximately," or "substantially." Unless otherwise stated, "about," "approximately," or "substantially" indicates that the number allows a variation of ±20%. Accordingly, in some embodiments, the numerical parameters used in the present disclosure and claims are approximations that may vary depending on the characteristics required by individual embodiments. In some embodiments, numerical parameters should take into account the specified significant figures and employ the method of preserving digits generally. Although the numerical ranges and parameters used to confirm their scope in some embodiments of the present disclosure are approximations, in specific embodiments, the setting of such values is as precise as possible within the feasible range.

For each patent, patent application, patent application publication, and other materials, such as articles, books, disclosures, publications, documents, etc., cited in the present disclosure, their entire contents are hereby incorporated into the present disclosure by reference. Excluded are application history documents inconsistent or conflicting with the content of the present disclosure, and also documents (currently or later appended to the present disclosure) that limit the broadest scope of the claims of the present disclosure. It should be noted that if there are inconsistencies or conflicts between the descriptions, definitions, and/or terminology used in the supplementary materials of the present disclosure and those in the present disclosure, the descriptions, definitions, and/or terminology used in the present disclosure shall prevail.

Finally, it should be understood that the embodiments described in the present disclosure are only intended to illustrate the principles of the embodiments of the present disclosure. Other variations may also fall within the scope of the present disclosure. Therefore, as examples and not limitations, alternative configurations of the embodiments of the present disclosure may be considered consistent with the teachings of the present disclosure. Accordingly, the embodiments of the present disclosure are not limited to those explicitly introduced and described herein.

## Claims

1. A forming method of a 6XXX series aluminum alloy, comprising:
heating an aluminum alloy raw material aluminum alloy aluminum alloy raw material of 6XXXseries at a heating temperature lower than a solution temperature of the aluminum alloy raw material, and controlling a heat obtained per unit mass of the aluminum alloy raw material to reach a preset heat range;
performing a subsequent treatment to the aluminum alloy raw material after heating to obtain an aluminum alloy part.

2. The forming method of claim 1, wherein the preset heat range is 320kJ/kg-450kJ/kg.

3. The forming method of claim 2, wherein the preset heat range is 370kJ/kg-400kJ/kg.

4. The forming method of claim 1, wherein the heating temperature is maintained at 50°C-100°C below the solution temperature of the aluminum alloy raw material.

5. The forming method of claim 4, wherein the heating temperature is maintained at 70°C-90°C below the solution temperature of the aluminum alloy raw material.

6. The forming method of claim 5, wherein the heating an aluminum alloy raw material of the 6XXX series aluminum alloy includes:
in response to the heating temperature being maintained at 50°C-100°C below the solution temperature of the aluminum alloy raw material, heating the aluminum alloy raw material by a heating device for a preset heating duration of 1 min-8 min.

7. The forming method of claim 6, in response to the heating temperature being maintained at 50°C-100°C below the solution temperature of the aluminum alloy raw material, heating the aluminum alloy raw material by a heating device for heating a preset heating duration, including:
in response to the heating temperature being maintained at 70° C-90° C below the solid solution temperature of the aluminum alloy raw material, the preset heating duration being in a range of 2min-5min.

8. The forming method of claim 6, wherein an effective heating power of the heating device is in a range of 320KW.h-400KW.h.

9. The forming method of claim 6, wherein a thickness of the aluminum alloy raw material is in a range of 0.8mm-5.0mm, and the preset heating duration is related to the thickness.

10. The forming method of claim 9, wherein the thickness is in a range of 0.8mm-3mm.

11. The forming method of claim 9, wherein the preset heating duration increases with the thickness, extending by 0s-120s for per 1mm increase in the thickness.

12. The forming method of claim 9, wherein the thickness of the aluminum alloy raw material is less than 1mm and the preset heating duration is in a range of 0s-240s; or the thickness of the aluminum alloy raw material is greater than or equal to 1mm and less than 2mm, the preset heating duration is in a range of 120s-300s; or the thickness of the aluminum alloy raw material is greater than or equal to 2mm and less than 3mm, the preset heating duration is in a range of 180s-360s; or the thickness of the aluminum alloy raw material is greater than or equal to 3mm and less than 4mm, the preset heating duration is in a range of 240s-420s; or the thickness of the aluminum alloy raw material is greater than or equal to 4mm and less than or equal to 5mm, the preset heating duration is in a range of 300s-480s.

13. The forming method of claim 1, the subsequent treatment including:
transferring the aluminum alloy raw material to a mold after heating, performing a stamping forming operation and a pressure holding and cooling operation to obtain a stretched part;
heating the stretched part to obtain the aluminum alloy part.

14. The forming method of claim 13, wherein the stamping forming operation starts at a temperature of 80%-88% of the heating temperature.

15. The forming method of according to claim 14, wherein a transfer time of the transferring is less than 15s.

16. The forming method of claim 13, wherein a stamping speed of stamping equipment in the stamping forming operation is not less than 80 mm/s, .

17. The forming method of claim 16, wherein the stamping speed is in a range of 1200mm/s-330mm/s.

18. The forming method of claim 13, wherein a cooling rate in the pressure holding and cooling operation is not more than 60°C/s.

19. The forming method of claim 13, wherein the pressure holding and cooling operation is at a pressure of 0.8 MPa-2 MPa.

20. The forming method of claim 13, wherein the pressure holding and cooling operation includes:
cooling down a formed part formed by the stamping forming operation to less than 200°C, performing natural air cooling.

21. The forming method of claim 13, further comprising: performing a pretreatment on the aluminum alloy raw material before heating the aluminum alloy raw material;
wherein the pretreatment includes: spraying a lubricant on a surface of the aluminum alloy raw material to ensure that a friction coefficient between the mold and the aluminum alloy raw material does not exceed 0.2.

22. The forming method of claim 21, wherein a kinetic viscosity of the lubricant is not more than 50 mPa·s at a temperature of 20° C, a density of the lubricant is in a range of 0.97 g/cm3-0.99 g /cm3, and a pH value of the lubricant is in a range of 9-10.

23. The forming method of claim 1, wherein the 6XXX-series aluminum alloy includes at least one of 6014 aluminum alloy, 6016 aluminum alloy, 6061 aluminum alloy, or 6082 aluminum alloy.

24. The forming method of claim 1, wherein the aluminum alloy raw material is in a T4 temper or an O temper.

25. An aluminum alloy part, wherein the aluminum alloy part is prepared by the forming method of a 6XXX series aluminum alloy of any one of claims 1-22.

26. An automobile, wherein the automobile comprises the aluminum alloy part of claim 23.

27. The automobile of claim 26, wherein the aluminum alloy part is disposed in one or more of an inner door panel, an outer door panel, a side panel, and a structural reinforcement of a body of the automobile.
